# EUROPÄISCHE PATENTANMELDUNG

(11) **EP 1 096 779 A2**
(43) Veröffentlichungstag der Anmeldung: **02.05.2001**
(21) Anmeldenummer: 00123529.0
(22) Anmeldetag: 27.10.2000
(51) Int. Cl.: H04N 1/195

(54) **Lesegerät**

(30) Priorität: 29.10.1999 DE 19952393
(71) Anmelder: Baum Retec AG i. Gr., 69257 Wiesenbach (DE)
(72) Erfinder: Baum, Wolfgang, 69257 Wiesenbach (DE)
(74) Vertreter: Sommer, Peter

(57) **Zusammenfassung**

Lesegerät, umfassend einen Lesetisch (1) und eine in einem Abstand zu dem Lesetisch angeordnete Bilderfassungseinheit (2) wobei die Bilderfassungseinheit in einem im wesentlichen konstanten Abstand über dem Lesetisch (1) bewegbar ist

## Beschreibung

### Technisches Gebiet

Lesegeräte werden unter anderem dazu verwendet, Menschen trotz ihrer Sehbehinderung in die Lage zu versetzen, Bilder oder Text zu erfassen und in vergrößerter Darstellung wiederzugeben.

### Stand der Technik

Auf dem Markt sind Lesegeräte erhältlich, die einen Lesetisch aufweisen, welcher unter einer ortsfest angeordneten Kamera hin- und herbewegt wird. Der Lesetisch ist dabei auf einer Bodenplatte des Gestells verschiebbar befestigt und derart bewegbar, daß ein auf den Lesetisch aufgelegtes Dokument durch Verschieben des Lesetischs abschnittsweise erfaßt wird. Die feststehende Kamera ist in einem Kopfteil untergebracht, welches über eine Rückwand mit der Bodenplatte verbunden ist. Neben der Aufnahme der Kamera kann in dem Kopfteil auch gleichzeitig ein Bildschirm untergebracht sein, sowie eine Beleuchtung des Lesetischs. Anstelle eines integrierten Bildschirms kann das Kopfteil auch eine Stellfläche für einen Bildschirm bereitstellen, wodurch die Verwendung bestehender Bildschirme möglich ist. Diese Lesegräte ermöglichen dem Sehbehinderten auch das Unterschreiben von Briefen oder die Anbringung von Notizen auf den erfassten und angezeigten Dokumenten.

Zur Erfassung von Texten oder Bildern ist weiterhin eine Vorrichtung bekannt, bei der sowohl der Lesetisch als auch die Kamera feststeht, wobei zum Ausgleich von Paralaxefehlern die Kamera in einem in einem sehr großen Abstand, der ein mehrfaches der maximalen Längenabmessung des Lesetischs trägt, angeordnet. Zur Wiedergabe des erfaßten Bildes ist es hier zwingend erforderlich, den Bildschirm neben dem Lesegerät anzuordnen, was zwangsläufig zu einem hohen Platzbedarf führt.

Weiterhin ist aus der DE 197 30 875 ein einfaches Lesegerät bekannt, bei dem eine in einem Gestell gelagerte erste optische Linse und ein am Gestell beweglich gelagertes zusätzliches optisches System vorhanden ist, welches in den Strahlengang der ersten Linse einführbar ist. Dies geschieht durch Schwenken des zusätzlichen optischen Systems.

Die Aufgabe der Erfindung besteht darin, ein Lesegerät bereitzustellen, welches einen geringen Platzbedarf benötigt und dabei eine für den Sehbehinderten deutlich verbesserte Ergonomie besitzt.

### Darstellung der Erfindung

Gemäß der Erfindung umfasst das Lesegerät einen Lesetisch und ein in einem Abstand zum Lesetisch angeordnete Bilderfassungseinheit, wobei die Bilderfassungseinheit in einem im wesentlichen konstanten Abstand über den Lesetisch bewegbar ist. Durch die bewegbare Anordnung der Bilderfassungseinheit lassen sich Parallaxenfehler vermeiden und gleichwohl ein kompakter Aufbau des Geräts erzielen. Dabei ist es nicht mehr erforderlich, den Lesetisch zu verschieben, so daß die Stellfläche des Lesegeräts im wesentlichen gleich der Arbeitsfläche ist, wodurch sich wiederum ein verringerter Platzbedarf unter Arbeitsbedingungen ergibt.

Vorteilhafterweise ist die Bilderfassungseinheit in einem Kopfteil angedordnet, wobei das Kopfteil mit dem Lesetisch verbunden ist. Durch diese Anordnung ist eine bauliche Einheit hergestellt.

Vorteilhafterweise sind in dem Kopfteil neben den Mitteln für die Bewegung der Bilderfasssungseinheit noch Beleuchtungsmittel vorgesehen, welche auf den Lesetisch gerichtet sind. Hierdurch wird der Kontrast in dem zu erfassenden Bereich verbessert.

Zur Verbesserung der Erfassung verfügt die Bildeerfassungseinheit über Steuerleitungen zu einer Steuereinheit zum Zweck der Verstellung des Fokus, des Abbildungsmaßstabs (Zoom) und/oder der Blende zum Zweck der Anpassung der Tiefenschärfe sowie zur Steuerung der Bewegung.

Vorteilhafterweise ist im Bereich des Kopfteils ein Bildschirm angeordnet, wobei der Bildschirm vorzugsweise gegenüber dem Kopfteil verstellbar ist und über ein Drehgelenk mit dem Kopfteil verbunden sein kann. Dadurch läßt sich der Bildschirm in der Höhe einstellen.

Weiterhin ist es vorteilhaft, wenn der Bildschirm bezüglich des Kopfteils tiefenverstellbar ist, was vorzugsweise durch eine Teleskopführung zwischen Bildschirm und Kopfteil bewirkt werden kann. Der dadurch einstellbare Augenabstand führt bei Sehbehinderten, die einen kleinen Fokussierbereich aufweisen, zu einer wesentlichen ergonomischen Verbesserung.

Schließlich ist es vorteilhaft, wenn der Bildschirm gegenüber dem Kopfteil in seiner Neigung ausrichtbar ist, wobei die Verbindung von Bildschirm und Kopfteil über ein Drehgelenk erfolgt.

Besonders vorteilhaft ist die Verwendung eines Flachbildschirms, da hier aufgrund des verringerten Gewichts und der verringerten Bautiefe eine nahezu beliebige Positionierung des Bildschirm an oder vor oder über dem Lesegerät möglich ist.

Mit dem Begriff "Bildschirm" werden sämtliche Anzeigegeräte umfaßt, ob es sich um Bildschirme nach dem Prinzip der Braun' schen Röhre oder um Flachbildschirme in LCD- oder Plasma-Technik oder um andere handelt. Wesentlich ist allein die Eignung zur Darstellung von optisch wahrnehmbaren Zeichen.

### Kurzbeschreibung der Zeichnung

In der Zeichnung ist ein Ausführungsbeispiel der Erfindung dargestellt. Es zeigt die
- Fig. 1: ein Lesegerät mit einem Bildschirm in perspektivischer Ansicht, die
- Fig. 2: das Lesegerät aus Fig. 1 in Ansicht von hinten mit geöffnetem Kopfteil.

### Ausführungsbeispiel der Erfindung

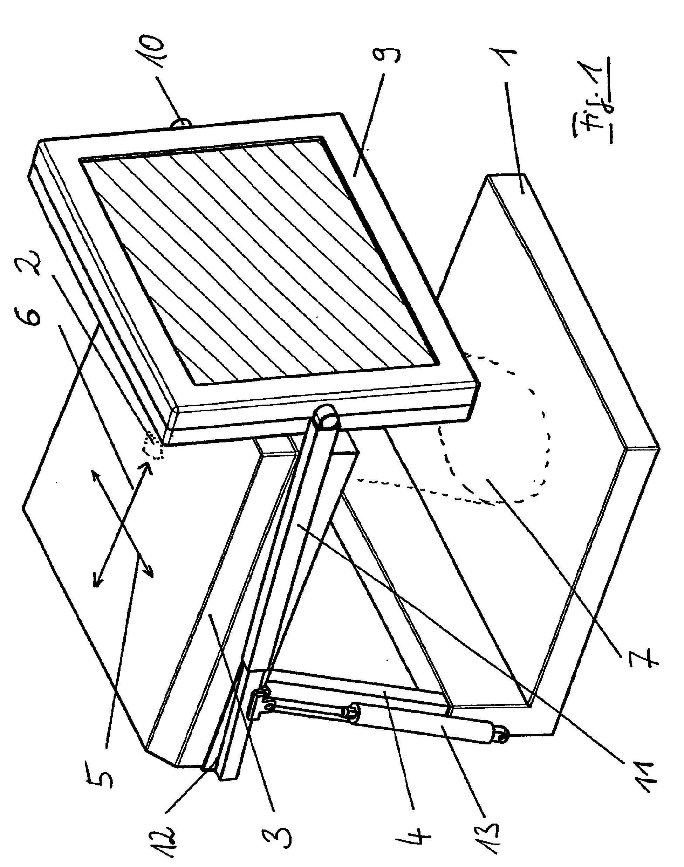

Das in Fig. 1 dargestellte Lesegerät umfaßt einen Lesetisch 1, auf welchem ein zu erfassender Text oder ein Bild aufgelegt wird. Der Lesetisch ist so dimensioniert, daß die üblicherweise zu lesenden Schriftstücke vollständig darauf angeordnet werden können. Oberhalb des Lesetischs 1 ist eine Bilderfassungseinheit mit einer Kamera 2 in einem im wesentlichen konstanten Abstand in einem Kopfteil 3 angeordnet. Das Kopfteil 3 ist über eine Rückwand 4 mit dem Lesetisch 1 verbunden.

Die Kamera 2 läßt sich innerhalb des Kopfteils 3 in eine X-Richtung 5 und in eine Y-Richtung 6 bewegen, angedeutet durch die entsprechenden Pfeile. Durch die Bewegung der Kamera 2 verschiebt sich der auf den Lesetisch gerichtete Erfassungsbereich 7, wodurch eine Erfassung eines Bereichs, der ein mehrfaches größer als der Erfassungsbereich 7 ist, und der vorzugsweise den gesamten Lesetisch umfaßt, erfaßt wird.

Wesentlich ist hierbei, daß die Erfassung ohne wesentlichen Parallaxefehler stattfindet, wie dies auch bei den Lesegeräten gemäß dem Stand der Technik der Fall ist.

Die Bewegung der Kamera 2 wird über ein nicht dargestelltes Bedienpult gesteuert, welche auch an einem nicht dargestellten Rechner angeschlossen sein kann. Mit diesem Rechner ist weiterhin ein Bildschirm 9 zum Zweck der Darstellung der mit der Kamera 2 erfaßten Bildinhalte verbunden. Diese Bildschirm 9 ist als Flachbildschirm ausgeführt, wodurch die Positionierung sogar teilweise vor dem Kopfteil 3 möglich ist.

In Fig. 1 ist weiterhin die Halterung des Flachbildschirms 9 an dem Lesegerät gezeigt. Dabei ist der Flachbildschirm über ein Drehgelenk 10 mit einem Teleskoparm 11 verbunden, welcher wiederum über ein Drehgelenk 12 seitlich an dem Kopfteil 3 befestigt ist. Der Teleskoparm 11 wird über eine Gasdruckfeder 13 in seiner Winkellage zu dem Kopfteil 3 nach der Einstellung der gewünschten Position fixiert. Anstelle der Gasdruckfeder 13 sind auch andere Befestigungen denkbar, beispielsweise eine Rutschkupplung im Bereich des Gelenks 12.

Der Flachbildslchirm 9 läßt sich über den Teleskoparm 11 auf eine gewünschte Entfernung zum Betrachter einstellen, so daß sich der Betrachter nicht wie bislang zum Bildschirm beugen muß, sondern der Bildschirm in den für den Betrachter günstigen Abstand gebracht wird.

Weiterhin ist der Flachbildschirm 9 über das Drehgelenk 10 in seiner Neigung einstellbar und über das Drehgelenk 12 in seiner Horizontalposition.

Anstelle des dargestellten Flachbildschirms ist es selbstverständlich ebenso möglich, auf dem Kopfteil 3 des Lesegeräts einen herkömmlichen Bildschirm anzuordnen, um so eine bestehende Geräteausstattung weiter nutzen zu können, da Flachbildschirme deutlich teurer als herkömmliche Bildschirme sind.

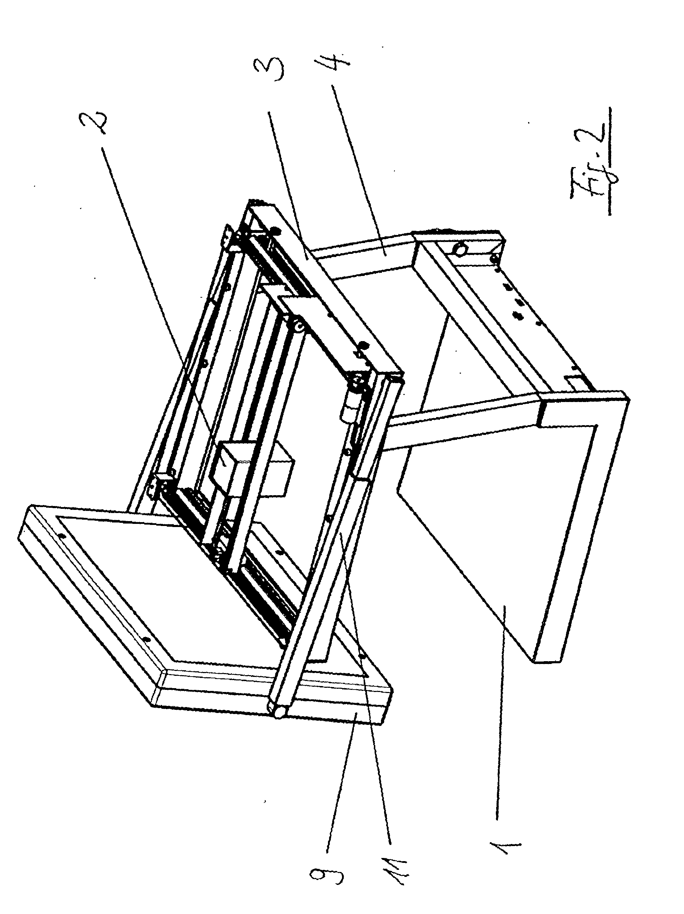

Der Antrieb der Kamera 2 ist in Fig. 2 dargestellt. Die gesamten mechanischen Komponenten nach Art eines Kreuzschlittens mit Seilzugantrieb sind in dem Kopfteil 3 untergebracht. Die Kamera 2 ist über flexible Leitungen an jeder Stelle ihres Wegs mit einem elektrischen Ausgang zum Anschluß eines Rechners verbunden. Anstelle eines zusätzlichen Rechners kann selbstverständlich auch ein eigener Schaltkreis mit einer eigenen Auswerteelektronik für die von der Kamera 2 erfaßten Bildsignale vorgesehen sein, an den der Flachbildschirm 9 direkt anschließbar ist. Die hierzu erforderliche Elektronik ist unterhalb des Lesetischs 1 untergebracht.

In oder an dem Kopfteil 3 sind weiterhin Beleuchtungsmittel vorgesehen, die auf den Lesetisch 1 gerichtet sind. Die Beleuchtungsmittel sind so angeordnet, daß sie die Bewegung der Kamera 2 nicht stören. Dabei kann weiterhin berücksichtigt werden, dass ein Anheben des Lesegeräts ohne Gefahr der Beschädigung der Beleuchtungsmittel möglich ist, wozu die Beleuchtungsmittel quer zum Betrachter vorne und/oder hinten auf der Unterseite des Kopfteils 3 angeordnet sind.

### Bezugszeichenliste

- 1.: Lesetisch
- 2.: Kamera
- 3.: Kopfteil
- 4.: Rückwand
- 5.: X-Richtung
- 6.: Y-Richtung
- 7.: 7. Erfassungsbereich
- 8. 9.: Bildschirm
- 10.: Drehgelenk
- 11.: Teleskopführung
- 12.: Drehgelenk
- 13.: Gasdruckfeder

## Patentansprüche

1. Lesegerät, umfassend einen Lesetisch (1) und eine in einem Abstand zu dem Lesetisch (1) angeordnete Bilderfassungseinheit (2), dadurch gekennzeichnet, daß die Bilderfassungseinheit in einem im wesentlichen konstanten Abstand über dem Lesetisch (1) bewegbar ist.

2. Lesegerät nach Anspruch 1, dadurch gekennzeichnet, daß die Bilderfassungseinheit (2) in einem Kopfteil (3) angeordnet ist und daß das Kopfteil (3) mit dem Lesetisch (1) verbunden ist.

3. Lesegerät nach einem der Ansprüche 1 oder 2, dadurch gekennzeichnet, daß die Bilderfassungseinrichtung (2) über Steuerleitungen mit einem Steuergerät zur Verstellung des Fokus, des Abbildungsmaßstabs (Zoom) und/oder der Blende zum Zweck der Anpassung der Tiefenschärfe sowie zur Steuerung der Bewegung verbunden ist.

4. Lesegerät nach einem der Ansprüche 1 bis 3, dadurch gekennzeichnet, daß im Bereich des Kopfteils (3) ein Bildschirm (9) angeordnet ist.

5. Lesegerät nach Anspruch 4, dadurch gekennzeichnet, daß der Bildschirm (9) gegenüber dem Kopfteil (3) höhenverstellbar ist, wobei der Bildschirm vorzugsweise über ein Drehgelenk (12) mit dem Kopfteil (3) verbunden ist.

6. Lesegerät nach Anspruch 4 oder 5, dadurch gekennzeichnet, daß der Bildschirm (9) bezüglich des Kopfteils (3) tiefenverstellbar ist, vorzugsweise durch eine Teleskopführung (11).

7. Lesegerät nach einem der Ansprüche 4 bis 6, dadurch gekennzeichnet, daß der Bildschirm (9) gegenüber dem Kopfteil (3) über ein Drehgelenk (10) bezüglich seiner Winkellage ausrichtbar ist.

8. Lesegerät nach einem der Ansprüche 1 bis 7, dadurch gekennzeichnet, daß der Bildschirm (9) als Flachbildschirm ausgeführt ist.
